# DEMANDE DE BREVET EUROPEEN

(11) **EP 4 357 010 A1**
(43) Date de publication de la demande: **24.04.2024**
(21) Numéro de dépôt: 23199873.3
(22) Date de dépôt: 26.09.2023
(51) Int. Cl.: B01F 23/451, B01F 25/314, B01F 25/313, B01F 35/71, A01M 7/00, B05B 7/32, B01F 101/04

(54) **ENSEMBLE DE PULVÉRISATION À INJECTION DIRECTE COMPRENANT UNE INTERFACE DE DOSAGE DIRECT**

(30) Priorité: 11.10.2022 FR 2210394
(71) Demandeur: Exel Industries, 51200 Epernay (FR)
(72) Inventeur: TRAGUS, Daniel, 60580 Coye la Forêt (FR); PROVENAZ, Philippe, 38240 MEYLAN (FR); CHABALLIER, Colin, 51000 Châlons en Champagne (FR); BACLE, Thibault, 69000 LYON (FR)
(74) Mandataire: Argyma

(57) **Abrégé**

La présente invention vise un ensemble de pulvérisation comprenant un dispositif d'injection, un premier circuit hydraulique (21) pour acheminer le liquide porteur jusqu'à une buse de pulvérisation (3), le premier circuit hydraulique (21) comprenant, en amont de la buse de pulvérisation (3), un tronçon d'injection (2), un deuxième circuit hydraulique (22) pour acheminer le produit actif jusqu'au dispositif d'injection, sous une pression d'injection supérieure à la pression de circulation de liquide porteur, le dispositif d'injection comprenant une interface de dosage direct (1) comprenant au moins un orifice traversant débouchant dans le tronçon d'injection (2) du premier circuit hydraulique (21), et le dispositif d'injection comprenant par ailleurs au moins un actionneur (4) correspondant configuré pour ouvrir ou fermer chaque orifice traversant de sorte à laisser un dosage déterminé de produit actif traverser l'au moins un orifice pour être injecté dans le flux de liquide porteur.

## Description

### DOMAINE TECHNIQUE

La présente invention concerne le domaine de la pulvérisation agricole et vise plus précisément un ensemble de pulvérisation à injection directe. Plus particulièrement, l'ensemble de pulvérisation selon l'invention comporte une interface de dosage direct de produit actif en amont d'au moins une buse de pulvérisation.

### ETAT DE LA TECHNIQUE

Une problématique bien connue dans le domaine de la pulvérisation agricole concerne le dosage de produit actif pulvérisé, qui doit être adapté au besoin. De façon constante, on recherche en effet la meilleure adéquation entre le besoin d'une culture en produit phytosanitaire et la quantité de produit pulvérisé. A cette fin, des techniques d'injection directe, ont été mises en point.

L'injection directe consiste à injecter un produit actif dans un jet continu d'eau, directement en amont de la buse de pulvérisation.

Le document FR 2964047 A1 décrit un exemple d'ensemble de pulvérisation à injection directe. Dans ce document, il est notamment décrit la présence d'injecteurs directement en amont de buses de pulvérisations d'un ensemble de pulvérisation. Chaque injecteur est apte à être obturé par un clapet afin d'éviter tout surdosage ou tout sous-dosage. Grâce à ce document, on connaît le principe du réglage du débit de produit actif, de façon active, au niveau de chaque buse de pulvérisation. On connaît ainsi un ensemble de pulvérisation à injection directe adapté pour délivrer un produit actif injecté dans un liquide porteur via un ensemble de buses avec un débit variable de produit actif réglé directement au niveau des buses de pulvérisation.

De façon connue, dans ce type d'ensemble de pulvérisation connu, des injecteurs sont ainsi configurés pour injecter le produit actif dans le flux de liquide porteur, selon un débit souhaité. Les injecteurs comprennent des orifices qui peuvent être ouverts ou fermés au moyen d'actionneurs tels que des électrovannes. Les injecteurs sont placés directement en amont des buses de pulvérisation.

Dans l'état de la technique relatif aux ensembles de pulvérisation à injection directe, on module ainsi le débit de produit actif injecté dans un flux de liquide porteur directement en amont des buses de pulvérisation. En contrôlant le débit de produit actif injecté, grâce à une commande adaptée des injecteurs, on peut améliorer la prévention des surdosages ou des sous-dosages.

Toutefois, on ne peut pas contrôler précisément, directement et en continu le dosage de produit actif injecté dans le flux de liquide porteur.

Il existe donc un besoin pour un ensemble de pulvérisation permettant de doser précisément et en continu le produit actif injecté dans un flux de liquide porteur, dans un ensemble de pulvérisation à injection directe.

A fortiori, il existe un besoin pour un tel ensemble de pulvérisation permettant en outre de disposer d'une large palette de dosage de produit actif dans un flux de liquide porteur.

Pour répondre au moins en partie à ce besoin, l'invention propose l'utilisation, dans un ensemble de pulvérisation à injection directe, d'une interface de dosage direct comprenant une pluralité d'orifices, notamment des nano-orifices et/ou des micro-orifices, en particulier de tailles différentes, les orifices étant couplés à des actionneurs commandés de façon à les ouvrir ou à les fermer. On réalise par ce biais un dosage précis et en continu d'un ou plusieurs produits actifs dans un flux de liquide porteur.

Les produits actifs dosés sont injectés dans un flux de liquide porteur directement en amont de buses de pulvérisation.

### PRESENTATION DE L'INVENTION

Plus précisément, l'invention a pour objet un ensemble de pulvérisation comprenant un premier réservoir configuré pour contenir un liquide porteur, par exemple de l'eau, et un deuxième réservoir configuré pour contenir un produit actif, au moins une buse de pulvérisation, au moins un dispositif d'injection, un premier circuit hydraulique pour acheminer le liquide porteur du premier réservoir jusqu'à la buse de pulvérisation, sous une pression de circulation de liquide porteur, le premier circuit hydraulique comprenant, en amont de la buse de pulvérisation, un tronçon d'injection, un deuxième circuit hydraulique pour acheminer le produit actif du deuxième réservoir jusqu'au dispositif d'injection, sous une pression d'injection supérieure à la pression de circulation de liquide porteur, le dispositif d'injection de produit actif étant connecté au tronçon d'injection du premier circuit hydraulique et étant configuré pour injecter le produit actif dans un flux de liquide porteur circulant dans le premier circuit hydraulique, le dispositif d'injection comprenant, à l'extrémité du deuxième circuit hydraulique opposée au deuxième réservoir, une interface de dosage direct comprenant une pluralité d'orifices traversants débouchant dans le tronçon d'injection du premier circuit hydraulique, et le dispositif d'injection comprenant au moins un actionneur correspondant à la pluralité d'orifices, configuré pour ouvrir ou fermer la pluralité d'orifices traversants, de sorte à laisser un dosage déterminé de produit actif traverser au moins un orifice ouvert parmi la pluralité d'orifices traversants de l'interface de dosage direct pour être injecté dans le flux de liquide porteur, de façon à former un mélange composé de liquide porteur et de produit actif dosé destiné à être pulvérisé via l'au moins une buse de pulvérisation, aux fins de traitement de cultures.

Grâce à l'invention, il est possible de bénéficier d'une grande plage de dosage de produit(s) actif(s) dans un liquide porteur, directement en amont des buses d'un système de pulvérisation. De plus, l'invention permet de s'assurer d'un dosage constant quelle que soit la vitesse de déplacement du système de pulvérisation ou de celle de la buse par rapport au terrain.

Par exemple, l'au moins un actionneur est un actionneur piézoélectrique.

Par exemple, l'au moins un actionneur est un actionneur pneumatique et l'ensemble de pulvérisation comprend un circuit à air comprimé pour permettre l'actionnement des actionneurs pneumatiques.

Notamment, l'au moins un actionneur est un actionneur pneumatique à actionnement piézoélectrique.

Par exemple, l'au moins un actionneur est une vanne solénoïde.

Avantageusement, l'au moins un actionneur est commandé en ouverture et en fermeture par un générateur à modulation de largeur d'impulsion.

Avantageusement, la pression d'injection est supérieure d'au moins un bar à la pression de circulation de liquide porteur.

En pratique, la différence entre la pression d'injection et la pression de circulation dépend en particulier de la viscosité du produit actif par rapport à celle du liquide porteur.

Selon un mode de réalisation, les orifices ne présentent pas tous le même diamètre, les différents diamètres des orifices étant notamment compris entre 50 µm et 300 µm.

Selon un mode de réalisation, l'ensemble de pulvérisation comprend une pluralité d'orifices et un ensemble d'actionneurs correspondants, et comprend par ailleurs une unité de calcul pour déterminer, à partir d'une consigne de dosage, la quantité de produit actif à injecter dans le flux de liquide porteur et pour commander l'ouverture et la fermeture du nombre correspondant d'orifices de l'interface de dosage direct.

Selon un mode de réalisation, l'unité de calcul détermine une fréquence d'ouverture et de fermeture pour chaque orifice d'un ensemble d'orifices parmi les orifices de l'interface de dosage direct, en fonction d'un débit de liquide porteur dans le premier circuit hydraulique. La fréquence d'ouverture et de fermeture peut notamment varier d'un orifice à l'autre, pour une plus grande précision du dosage à la buse.

Selon un mode de réalisation, le produit actif circule suivant une direction d'injection et le liquide porteur circule suivant une direction de circulation lors de l'injection du produit actif dans le liquide porteur, la direction d'injection du produit actif étant sensiblement parallèle à la direction de circulation du liquide porteur, ou formant avec elle un angle compris entre 0° et 90°.

Avantageusement, l'au moins une buse de pulvérisation comprend une tête de buse formant une chambre directement en amont d'une sortie de la buse de pulvérisation, et le tronçon d'injection forme une portion circulaire logée dans la chambre, et l'ensemble de pulvérisation comprend une pluralité d'orifices répartis en étoile sur le tronçon d'injection de sorte à injecter du produit actif dans la tête de buse.

Dans ce cas, le mélange du produit actif dans le liquide porteur est encore meilleur et réalisé directement dans la tête de buse.

Avantageusement, l'ensemble de pulvérisation comprend une pluralité de buses de pulvérisation et une ou plusieurs interfaces de dosages dédiées à une buse de pulvérisation ou à une pluralité de buses de pulvérisation.

Selon un mode de réalisation, l'ensemble de pulvérisation comprend une ligne de recirculation de produit actif s'étendant entre l'au moins une buse de pulvérisation et le deuxième réservoir pour assurer une circulation continue du produit actif dans l'ensemble de pulvérisation.

Avantageusement, l'ensemble de pulvérisation comprend au moins deux deuxièmes réservoirs de produit actif connectés respectivement à des deuxièmes circuits hydrauliques correspondants ayant chacun une interface de dosage direct avec le premier circuit hydraulique.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :

La figure 1 est une représentation schématique de l'ensemble de pulvérisation selon un premier mode de réalisation de l'invention ;

La figure 2 est une représentation schématique de l'ensemble de pulvérisation selon un premier mode de réalisation de l'invention. Il faut noter que les figures exposent l'invention de manière détaillée pour permettre de mettre en oeuvre l'invention, lesdites figures pouvant bien entendu servir à mieux définir l'invention le cas échéant.

### DESCRIPTION DETAILLEE DE L'INVENTION

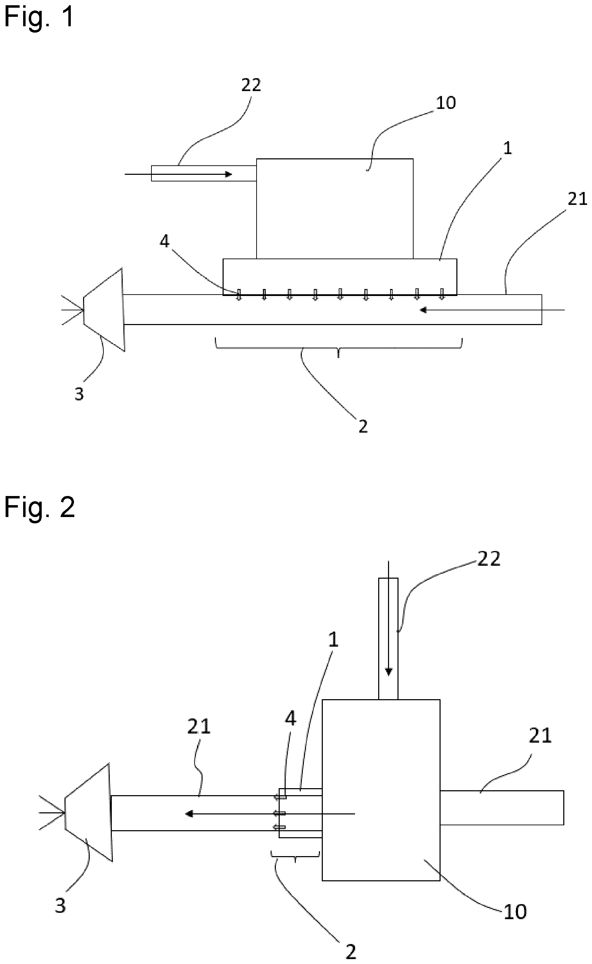

L'invention concerne un ensemble de pulvérisation à injection directe. Un tel ensemble de pulvérisation est représenté de façon schématique à la figure 1 et, suivant un autre mode de réalisation, sur la figure 2.

L'ensemble de pulvérisation comprend un premier réservoir comprenant un liquide porteur, notamment de l'eau et un deuxième réservoir contenant un produit actif notamment un herbicide, un fongicide, un insecticide ou un fertilisant. Selon un mode de réalisation, l'ensemble de pulvérisation comprend plusieurs deuxièmes réservoirs pouvant contenir des produits actifs différents. Dans ce cas, lesdits produits actifs différents peuvent être dosés simultanément dans le liquide porteur.

L'ensemble de pulvérisation selon l'invention comprend également au moins une buse de pulvérisation 3, de préférence une pluralité de buses de pulvérisation 3 réparties le long d'une rampe de pulvérisation. Par exemple, la rampe de pulvérisation est agencée en tronçons comprenant chacun un ensemble de buses de pulvérisations 3 destinées à être commandées de façon identique.

Chacun des premier et deuxième réservoirs est relié aux buses de pulvérisation 3 par l'intermédiaire, respectivement, d'un premier circuit hydraulique 21 et d'un deuxième circuit hydraulique 22. Lorsqu'il y a plusieurs deuxièmes réservoirs, notamment contenant différents produits actifs, il y a plusieurs deuxièmes circuits hydrauliques 22 également, ayant une interface respective avec le premier circuit hydraulique 21.

De préférence, les premier et deuxième circuits hydrauliques 21, 22 sont des circuits fermés au moyen de lignes de recirculation, le premier circuit hydraulique 21 rebouclant dans le premier réservoir et le deuxième circuit hydraulique 22 rebouclant dans le deuxième réservoir.

L'ensemble de pulvérisation comprend en particulier un dispositif d'injection connecté entre le deuxième circuit hydraulique 22 et un tronçon d'injection 2 faisant partie du premier circuit hydraulique 21 et situé directement en amont des buses de pulvérisation 3.

Le dispositif d'injection est configuré pour injecter du produit actif dans un flux de liquide porteur circulant dans le premier circuit hydraulique 21 depuis le premier réservoir jusqu'aux buses de pulvérisation 3. A cette fin, le dispositif d'injection comprend une interface de dosage direct 1 comportant un ou plusieurs orifices pour permettre l'injection de produit actif dans le flux de liquide porteur circulant dans le tronçon d'injection 2 du premier circuit hydraulique 21.

Le produit actif circule dans le deuxième circuit hydraulique 22 sous une pression d'injection tandis que le liquide porteur circule dans le premier circuit hydraulique 21 sous une pression de circulation inférieure à la pression d'injection. De préférence, la pression d'injection est supérieure d'au moins un bar à la pression de circulation. Par exemple, la pression d'injection est de 6 bars et la pression de circulation est de 3 bars. En pratique, la pression d'injection est choisie en fonction des propriétés physicochimiques du produit, notamment sa viscosité.

Selon le mode de réalisation de la figure 1, la direction de circulation du produit actif au niveau de l'interface de dosage direct 1 est sensiblement orthogonale à la direction de circulation du liquide porteur. Dans ce cas, pour que le mélange soit le plus efficace, la différence de pression entre la pression d'injection et la pression de circulation est de préférence élevée, notamment supérieure à deux bars, de préférence supérieure à trois bars.

Selon le mode de réalisation de la figure 2, la direction de circulation du produit actif au niveau de l'interface de dosage direct 1 est sensiblement parallèle à la direction de circulation du liquide porteur. Dans ce cas, la différence de pression entre la pression d'injection et la pression de circulation peut être moins élevée, notamment de l'ordre d'un bar.

Ainsi, l'angle formé entre l'axe principale selon lequel circule le produit actif et l'axe principale selon lequel circule le liquide porteur, au niveau de l'interface de dosage direct, peut notamment être compris entre 0° et 90°. Plus l'angle sera proche de 0°, c'est-à-dire que la direction de circulation du produit actif au niveau de l'interface de dosage directe est sensiblement parallèle à la direction de circulation du liquide porteur, plus l'injection de produit actif dans le liquide porteur sera facilitée.

Le ou les orifices de l'interface de dosage direct 1 sont des trous, notamment sensiblement circulaires et pouvant présenter un diamètre compris entre 50 µm et 300 µm. Selon un mode de réalisation, s'il y a plusieurs orifices, ces derniers peuvent présenter des diamètres différents.

Chaque orifice est couplé à un actionneur 4 commandé pour ouvrir ou fermer le passage de produit actif par ledit orifice. De préférence, un actionneur 4 est couplé à un unique orifice. Alternativement, un actionneur 4 peut être couplé à un groupe d'orifices, fermant ou ouvrant simultanément l'ensemble des orifices dudit groupe d'orifices. Notamment, chaque actionneur est commandé en ouverture et en fermeture au moyen d'un générateur à modulation de largeur d'impulsion (PWM pour Pulse Width Modulation en anglais) de façon à ouvrir et fermer chaque orifice à une fréquence d'ouverture et de fermeture.

Selon un mode de réalisation, une unité de commande 10 est configurée pour commander l'ouverture ou la fermeture d'un nombre d'orifices correspond à une consigne de dosage. Ainsi, en fonction d'un dosage de produit actif souhaité correspondant à ladite consigne de dosage, par exemple déterminé par une unité de calcul configurée à cet effet, l'unité de commande 10 détermine le nombre d'orifices à ouvrir, les autres orifices devant être fermés, de sorte à injecter la quantité voulue de produit actif dans le liquide porteur, ainsi que la fréquence d'ouverture et de fermeture de chaque orifice.

Notamment, la consigne de dosage peut dépendre de différents paramètres pouvant varier individuellement ou concomitamment, dont la vitesse du système de pulvérisation, la vitesse de la buse de pulvérisation notamment. La consigne de dosage peut être déterminée en fonction d'une cartographie de modulation de doses de produits actifs à appliquer, ou en fonction de calculs réalisés sur une reconnaissance des plantes à traiter.

En fonction par ailleurs du débit de produit actif demandé dans le deuxième circuit hydraulique 22 et du débit de liquide porteur circulant dans le premier circuit hydraulique 21, l'unité de calcul 10 peut déterminer un ensemble de signaux de commandes pour: ouvrir et fermer alternativement un ensemble d'orifices parmi les orifices de l'interface de dosage direct, la durée de l'ouverture et la durée de la fermeture sont variables pour chaque buse de pulvérisation 3.

Par exemple, l'unité de commande 10 détermine un ensemble d'orifices et une fréquence d'ouverture et de fermeture alternée des orifices de l'ensemble d'orifices. On injecte ainsi la quantité de produit actif voulu dans le flux de liquide porteur, directement en amont des buses de pulvérisation 3.

Ainsi, à titre d'illustration, selon l'invention, une unité de calcul 10 peut déterminer un dosage de produit actif à pulvériser, correspondant à un débit souhaité de produit actif en sortie de buse de pulvérisation 3, en I/min. Le débit souhaité de produit actif en sortie de buse correspond à la consigne de dosage.

En fonction du débit de liquide porteur acheminé jusqu'aux buses de pulvérisation 3, et en fonction, par exemple, de la vitesse de déplacement de l'ensemble de pulvérisation, l'unité de commande 10 détermine la quantité de produit actif à injecter dans le liquide porteur au niveau du tronçon d'injection 2, en fonction du temps.

Par exemple, l'unité de commande détermine, en fonction de la quantité de produit actif à injecter en fonction du temps, le nombre d'orifices à ouvrir et/ou la fréquence d'ouverture et de fermeture d'un ensemble d'orifices parmi les orifices de l'interface de dosage direct 1 et la durée d'ouverture des orifice. L'unité de commande 10 génère et transmet alors aux actionneurs des signaux de commande correspondant.

Selon un mode de réalisation, l'interface de dosage direct comprend au moins deux orifices, par exemple 32 orifices, notamment sensiblement circulaires et présentant respectivement au moins deux diamètres différents parmi les diamètres suivants : 50 µm, 80 µm, 100 µm, 150 µm ;180 µm ; 200 µm ; 300 µm.

Un avantage de disposer d'orifices de différentes tailles réside dans la possibilité de disposer d'une plus large palette de dosage.

Selon un mode de réalisation particulier, la ou les buses de pulvérisation 3 de l'ensemble de pulvérisation comprennent une tête de buse formant une chambre directement en amont d'une sortie de la buse de pulvérisation 3 et le tronçon d'injection 2 forme une portion circulaire logée dans la chambre. Alors, les orifices sont répartis en étoile sur le tronçon d'injection de sorte à injecter du produit actif dans la tête de buse 3.

Les actionneurs 4 sont par exemple des actionneurs piézoélectriques. Alternativement, les actionneurs 4 peuvent être des actionneurs commandés de type pneumo-valves. Dans ce cas, l'ensemble de pulvérisation comprend par ailleurs un circuit d'air comprimé pour assurer l'ouverture et la fermeture des pneumo-valves.

Un avantage des pneumo-valves réside dans le fait que l'on bénéficie alors de la puissance de l'air comprimé pour fermer la pneumo-valve. Il n'est pas nécessaire de fournir une force mécanique pour un système de fermeture à ressort par exemple, ce qui pourrait engendrer un encombrement plus important.

Selon un autre mode de réalisation, les actionneurs 4 sont des vannes solénoïdes. Un avantage lié à l'utilisation de vannes solénoïdes réside dans la simplicité de leur pilotage. Les vannes solénoïdes sont en effet directement pilotées et ne nécessitent pas l'ouverture préalable d'un circuit d'air, comme les pneumo-valves.

## Revendications

1. Ensemble de pulvérisation comprenant un premier réservoir configuré pour contenir un liquide porteur, par exemple de l'eau, et un deuxième réservoir configuré pour contenir un produit actif, au moins une buse de pulvérisation (3), au moins un dispositif d'injection, un premier circuit hydraulique (21) pour acheminer le liquide porteur du premier réservoir jusqu'à la buse de pulvérisation (3), sous une pression de circulation de liquide porteur, le premier circuit hydraulique (21) comprenant, en amont de la buse de pulvérisation (3), un tronçon d'injection (2), un deuxième circuit hydraulique (22) pour acheminer le produit actif du deuxième réservoir jusqu'au dispositif d'injection, sous une pression d'injection supérieure à la pression de circulation de liquide porteur, le dispositif d'injection de produit actif étant connecté au tronçon d'injection (2) du premier circuit hydraulique (21) et étant configuré pour injecter le produit actif dans un flux de liquide porteur circulant dans le premier circuit hydraulique (21), le dispositif d'injection comprenant, à l'extrémité du deuxième circuit hydraulique (22) opposée au deuxième réservoir, une interface de dosage direct (1) comprenant une pluralité d'orifices traversants débouchant dans le tronçon d'injection (2) du premier circuit hydraulique (21), et le dispositif d'injection comprenant au moins un actionneur (4) correspondant à la pluralité d'orifices, configuré pour ouvrir ou fermer la pluralité d'orifices traversants, de sorte à laisser un dosage déterminé de produit actif traverser au moins un orifice ouvert parmi la pluralité d'orifices traversants de l'interface de dosage direct (1) pour être injecté dans le flux de liquide porteur, de façon à former un mélange composé de liquide porteur et de produit actif dosé destiné à être pulvérisé via l'au moins une buse de pulvérisation (3), aux fins de traitement de cultures.

2. Ensemble de pulvérisation selon la revendication 1, dans lequel l'au moins un actionneur (4) est un actionneur piézoélectrique.

3. Ensemble de pulvérisation selon la revendication 1, dans lequel l'au moins un actionneur (4) est un actionneur pneumatique et l'ensemble de pulvérisation comprend un circuit à air comprimé pour permettre l'actionnement de l'au moins un actionneur pneumatique.

4. Ensemble de pulvérisation selon la revendication 3, dans lequel l'au moins un actionneur (4) est un actionneur pneumatique à actionnement piézoélectrique.

5. Ensemble de pulvérisation selon la revendication 1, dans lequel l'au moins un actionneur (4) est une vanne solénoïde.

6. Ensemble de pulvérisation selon l'une des revendications précédentes, dans lequel l'au moins un actionneur (4) est commandé en ouverture et en fermeture par un générateur à modulation de largeur d'impulsion.

7. Ensemble de pulvérisation selon l'une des revendications précédentes, dans lequel la pression d'injection est supérieure d'au moins un bar à la pression de circulation de liquide porteur.

8. Ensemble de pulvérisation selon l'une des revendications précédentes, dans lequel les orifices de la pluralité d'orifices ne présentent pas tous le même diamètre, les différents diamètres des orifices étant notamment compris entre 50 µm et 300 µm.

9. Ensemble de pulvérisation selon l'une des revendications précédentes, comprenant un ensemble d'actionneurs correspondant aux orifices de la pluralité d'orifices, l'ensemble de pulvérisation comprenant par ailleurs une unité de calcul (10) pour déterminer, à partir d'une consigne de dosage, la quantité de produit actif à injecter dans le flux de liquide porteur et pour commander l'ouverture et la fermeture du nombre correspondant d'orifices de l'interface de dosage direct (1).

10. Ensemble de pulvérisation selon la revendication précédente, dans lequel l'unité de calcul (10) détermine une fréquence d'ouverture et de fermeture pour chaque orifice d'un ensemble d'orifices parmi les orifices de l'interface de dosage direct (1), en fonction d'un débit de liquide porteur dans le premier circuit hydraulique.

11. Ensemble de pulvérisation selon l'une des revendications précédentes, dans lequel le produit actif circule suivant une direction d'injection et le liquide porteur circule suivant une direction de circulation lors de l'injection du produit actif dans le liquide porteur, la direction d'injection du produit actif étant sensiblement parallèle à la direction de circulation du liquide porteur, ou formant avec elle un angle compris entre 0° et 90°.

12. Ensemble de pulvérisation selon l'une des revendications précédentes, dans lequel l'au moins une buse de pulvérisation (3) comprend une tête de buse formant une chambre directement en amont d'une sortie de la buse de pulvérisation (3), et le tronçon d'injection (2) forme une portion circulaire logée dans la chambre, et l'ensemble de pulvérisation comprend une pluralité d'orifices répartis en étoile sur le tronçon d'injection (2) de sorte à injecter du produit actif dans la tête de buse.

13. Ensemble de pulvérisation selon l'une des revendications précédentes, comprenant une pluralité de buses de pulvérisation (3) et une ou plusieurs interfaces de dosages dédiées à une buse de pulvérisation (3) ou à une pluralité de buses de pulvérisation (3).

14. Ensemble de pulvérisation selon l'une des revendications précédentes, comprenant une ligne de recirculation de produit actif s'étendant entre l'au moins une buse de pulvérisation (3) et le deuxième réservoir pour assurer une circulation continue du produit actif dans l'ensemble de pulvérisation.

15. Ensemble de pulvérisation selon l'une des revendications précédentes, comprenant au moins deux deuxièmes réservoirs de produit actif connectés respectivement à des deuxièmes circuits hydrauliques (22) correspondants ayant chacun une interface de dosage direct (1) avec le premier circuit hydraulique (21).
